# EUROPEAN PATENT SPECIFICATION

(11) **EP 0 860 060 B1**
(45) Date of publication and mention of the grant of the patent: **12.04.2000**
(21) Application number: 96935187.3
(22) Date of filing: 07.11.1996
(51) Int. Cl.: H04B 7/26

(54) **FREQUENCY ASSIGNMENT IN A CELLULAR TELECOMMUNICATIONS NETWORK**
FREQUENZZUTEILUNG IN EINEM ZELLULAREN TELEKOMMUNIKATIONSNETZ
ATTRIBUTION DE FREQUENCE DANS UN RESEAU DE TELECOMMUNICATIONS CELLULAIRE

(30) Priority: 10.11.1995 GB 9523078; 01.12.1995 GB 9524592; 02.10.1996 GB 9620532
(43) Date of publication of application: 26.08.1998
(73) Proprietor: Ionica International Limited, Cambridge CB4 4AS (GB)
(72) Inventor: MARTIN, Paul, Maxwell, Newmarket, Suffolk CB8 9XS (GB)
(74) Representative: Hogg, Jeffery Keith
(86) International application number: GB9602729
(87) International publication number: WO9717771

(56) References cited:
- EP-A- 0 037 068
- EP-A- 0 470 831
- WO-A-91/13502
- WO-A-95/25406

## Description

The present invention relates to a method of assigning carrier frequencies to base stations in a cellular radio telecommunications network, and to a radio telecommunications network including such frequency assignments.

In known cellular radio systems, such as for mobile telephones, a network of base stations are provided each having antennas. Mobile subscriber units have antennas which are necessarily omni-directional as subscribers often move around, both within cells and from one cell to another. In consequence, a seven-cell frequency reuse pattern is common, as described, for example, in Cellular Radio Systems, Balston D M Macario RCV Editors, Artech House Inc, 1993, page 9 to 13. A nine-cell frequency reuse pattern is also described in EP 0410831. Patent publications W095/25406, W091/13502 and EP 0037068 describe various other frequency allocation schemes for mobile communication.

The present invention provides a cellular telecommunications network including a plurality of cells distributed around a reference cell, at least two cells being assigned as available for frequency-offset duplex communications the same group of RF carrier frequency pairs, whereby to the extent possible, different ones of said cells around the reference cell have different predetermined orders of preference for use of said RF carrier frequency pairs so as to substantially minimise interference.

Preferably, each said cell has a different predetermined order to each other of said cells.

Alternatively, where the number of frequency pairs is less than the total of the number of cells distributed in a ring-like distribution around the reference cell plus the reference cell, those of the cells having the same predetermined order of preference for RF carrier frequency pairs are distributed furthest apart so as to substantially minimise interference.

The present invention has significant advantages as bandwidth is strictly limited. The minimisation of interference, in particular co-channel interference, allows frequency reuse and hence increased call capacity.

The present invention also relates to a method of selecting for use RF carrier radio frequency pairs in a cellular telecommunications network including a plurality of cells distributed around a reference cell and assigned as available for frequency-offset duplex communications the same group of RF carrier frequency pairs wherein to the extent possible, different cells around the reference cell have different predetermined orders of preference for use of said RF carrier frequency pairs.

The RF carrier frequency pairs are for duplex communications between base stations and subscriber units in cells. Subscriber units are preferably at fixed locations. Transmissions are preferably by radio.

A preferred embodiment of the invention will now be described, by way of example, with reference to the drawings in which:
Figure 1 is a schematic diagram illustrating the system including a base station (BTE - Base Terminating Equipment) and subscriber unit (NTE - Network Terminating Equipment),
Figure 2 is a diagram illustrating frame structure and timing for a duplex link,
Figure 3 is a schematic topology of part of the preferred network showing four cells each having a base station and subscriber units,
Figure 4 is a schematic topology of a larger part of the preferred network.

### The Basic System

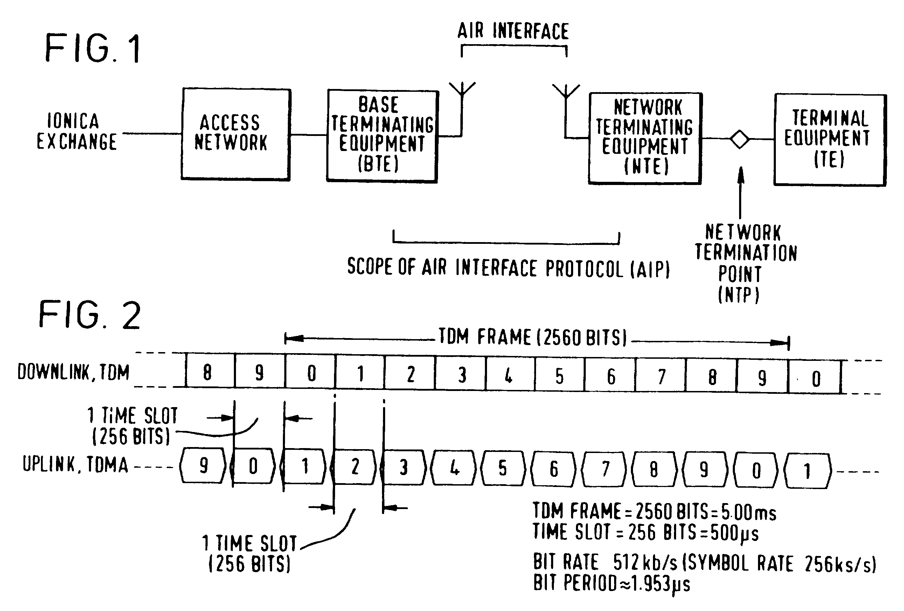

As shown in Figure 1, the preferred system is part of a telephone system in which the local wired loop from exchange to subscriber has been replaced by a full duplex radio link between a fixed base station and fixed subscriber unit. The preferred system includes the duplex radio link, and transmitters and receivers for implementing the necessary protocol. There are similarities between the preferred system and digital cellular mobile telephone systems such as GSM which are known in the art. This system uses a protocol based on a layered model, in particular the following layers; PHY (Physical), MAC (Medium Access Control), DLC (Data Link Control), NWK (Network).

One difference compared with GSM is that, in the preferred system, subscriber units are at fixed locations and there is no need for hand-off arrangements or other features relating to mobility. This means, for example, in the preferred system directional antennae and mains electricity can be used.

Each base station in the preferred system provides six duplex radio links at twelve frequencies chosen from the overall frequency allocation, so as to minimise interference between base stations nearby. The frame structure and timing for the duplex link is illustrated in Figure 2. Each duplex radio link comprises an up-link from a subscriber unit to a base station and, at a fixed frequency offset, a down-link from the base station to the subscriber unit. The down-links are TDM, and the up-links are TDMA. Modulation for all links is π/4 - DQPSK, and the basic frame structure for all links is ten slots per frame of 2560 bits i.e. 256 bits per slot. The bit rate is 512kbps. Down-links are continuously transmitted and incorporate a broadcast channel for essential system information. When there is no user information to be transmitted, the down-link transmissions continue to use the basic frame and slot structure and contain a suitable fill pattern.

For both up-link and down-link transmissions, there are two types of slot: normal slots which are used after call set-up, and pilot slots used during call set-up.

Each down-link normal slot comprises 24 bits of synchronisation information followed by 24 bits designated S-field which includes an 8 bit header, followed by 160 bits designated D-field. This is followed by 24 bits of Forward Error Correction and an 8 bit filler, followed by 12 bits of the broadcast channel. The broadcast channel consists of segments in each of the slots of a frame which together form the down-link common signalling channel which is transmitted by the base station, and contains control messages containing link information such as slot lists, multi-frame and super-frame information, connectionless messages and other information basic to the operation of the system.

During call set-up, each down-link pilot slot contains frequency correction data and a training sequence for receiver initialisation, with only a short S-field and no D-field information.

Up-link slots basically contain two different types of data packet. The first type of packet, called a pilot packet, is used before a connection is set up, for example, for an ALOHA call request and to allow adaptive time alignment. The other type of data packet, called a normal packet, is used when a call has been established and is a larger data packet, due to the use of adaptive time alignment.

Each up-link normal packet contains a data packet of 244 bits which is preceded and followed by a ramp of 4 bits duration. The ramps and the remaining bits left of the 256 bit slot provide a guard gap against interference from neighbouring slots due to timing errors. Each subscriber unit adjusts the timing of its slot transmissions to compensate for the time it takes signals to reach the base station. Each up-link normal data packet comprises 24 bits of synchronisation data followed by an S-field and D-field of the same number of bits as in each down-link normal slot.

Each up-link pilot slot contains a pilot data packet which is 192 bits long preceded and followed by 4 bits ramps defining an extended guard gap of 60 bits. This larger guard gap is necessary because there is no timing information available and without it propagation delays would cause neighbouring slots to interfere. The pilot packet comprises 64 bits of sync followed by 104 bits of S-field which starts with an 8 bit header and finishes with a 16 bit Cyclic Redundancy Check, 2 reserved bits, 14 FEC bits, and 8 tail bits. There is no D-field.

The S-field in the above mentioned data packets can be used for two types of signalling. The first type is MAC signalling (MS) and is used for signalling between the MAC layer of the base station and the MAC layer of a subscriber unit whereby timing is important. The second type is called associated signalling, which can be slow or fast and is used for signalling between the base station and subscriber units in the DLC or NWK layers.

The D-field is the largest data field, and in the case of normal telephony contains digitised speech, but can also contain non-speech data samples.

Provision is made in the preferred system for subscriber unit authentication using a challenge response protocol. General encryption is provided by combining the speech or data with a non-predictable sequence of cipher bits produced by a key stream generator which is synchronised to the transmitted super-frame number.

In addition, the transmitted signal is scrambled to remove dc components.

### Interference

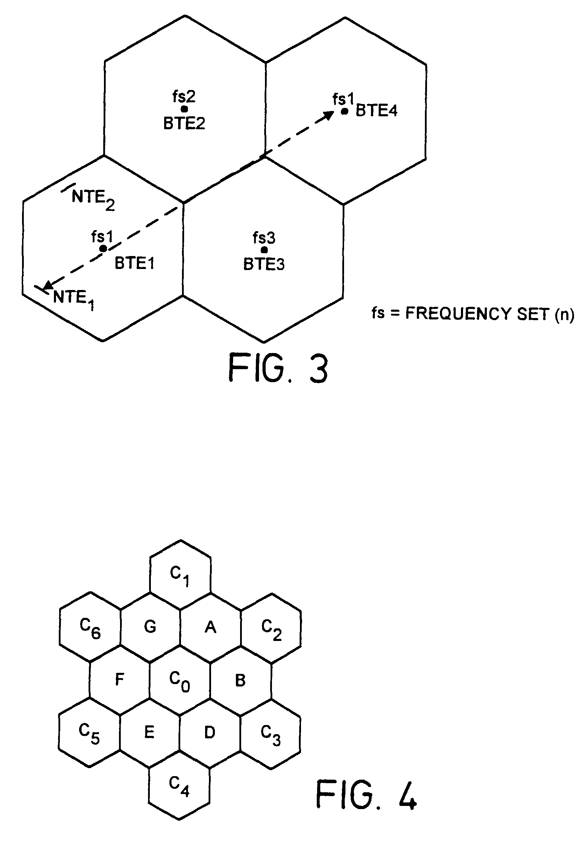

There are two types of interference; co-channel interference and adjacent channel interference as described below. A typical cellular topography is illustrated in Figure 3. The reference cell is that containing base station BTE 1. The available frequencies are divided into a number of subsets, denoted fs1, fs2, fs3.

### Co-Channel Interference

Cells containing base station BTE 1 and base station BTE 4 operate with the same frequency set. Transmissions from subscriber unit NTE 1 to base station BTE 1 result in co-channel interference to base station BTE 4. The exact level of interference depends on the path loss between the two cells. Nevertheless, minimising the transmit power from subscriber unit NTE 1 minimises the level of uplink interference present at base station BTE 4.

### Adjacent Channel Interference

Cells containing base stations BTE 1, BTE 2 and BTE 3 have mutually independent frequency sets, denoted fsl, fs2 and fs3 respectively. Each frequency set consists of a number of selected frequencies, denoted fn where n increases with increasing frequency. However, optimum usage of the available frequency sets will involve base stations BTE 1, BTE 2 and BTE 3 having adjacent frequencies present in the frequency sets (i.e. if selected rf frequency denoted n is used at base station BTE 1 then selected rf frequency denoted n±1 would be used by base station BTE 2 or BTE 3). Interference is possible if the power transmitted by subscriber unit NTE 1 in adjacent channels (n±1 using the notation above) is not sufficiently attenuated and the path loss between subscriber unit NTE 1 and either base station BTE 2 or base station BTE 3 is low. Again this effect can be mitigated by ensuring that subscriber unit NTE 1 is transmitting at no more than near minimum power for successful reception.

### Reducing Co-channel Interference

Figure 4 shows RF carrier frequency groups assigned among the cells in the preferred network. A frequency group is a range of frequencies or a selection of frequencies or, in other embodiments, can be a single frequency. In Figure 4, the reference cell is labelled C0, its assigned frequency group being denoted as C. The cells immediately adjacent to cell C0 have frequency group allocations denoted A, B, D, E, F, G all different to frequency group C0 of the reference cell. However, cells Cl to C6 each have identical frequency group allocations C to cell C0 and, in consequence, cause interference if the signal from any of those cells reaches cell C0. Each cell contains a base station and a number of subscriber units, the base station transmitting continuously (ie on the downlink) on all allocated frequencies. Appropriate frequency planning reduces the level of interference, specifically on the uplink, ie of signals received by the base station.

To minimise the level of interference caused at cell C0 by using the same frequency group, RF channel pairs are allocated to calls in such cells in a predetermined order of RF frequency patterns.

There are six preferred frequency patterns as shown in the table below, in descending order of preference:

**Table**

| Cell | C0 | C1 | C2 | C3 | C4 | C5 | C6 |
|---|---|---|---|---|---|---|---|
| RF carrier | 1 | 6 | 5 | 4 | 3 | 2 | 4 |
| frequency pairs | 2 | 1 | 6 | 5 | 4 | 3 | 5 |
| (denoted 1 to 6) | 3 | 2 | 1 | 6 | 5 | 4 | 6 |
| | 4 | 3 | 2 | 1 | 6 | 5 | 1 |
| | 5 | 4 | 3 | 2 | 1 | 6 | 2 |
| | 6 | 5 | 4 | 3 | 2 | 1 | 3 |

Each has six RF carrier frequency pairs available to its base station for communications with subscriber units. The order in which pairs are allocated are shown in the above table, C1 to C6 having the same frequency group. For example, carrier frequency 1 is the first choice for cell C0 but not for any other of the cell C1 to C6 having the same frequency group. Similarly each cell (C1 to C6 with the exception of C6) has a different order of priority.

If the number of RF carrier frequency pairs is less than the number of cells having the same allocated frequency group, it is not possible to derive a unique order of RF carrier frequency pair allocation for each of those cells. It is then necessary to consider the positioning of the cells sharing an RF frequency group and to select the distribution of RF carrier frequency pairs which minimises possible interference. An example in the above table can be seen by comparing cells C6 and C3. These both have identical orders of preference for RF carrier frequency pairs. As shown in Figure 3, cells C6 and C3 are best separated by the largest distance among the group of cells C0 to C6.

The above example of the invention has been described with reference to cells having omni-directional antennas. The invention can also be applied to cells having one or more outwardly directed directional antennas, such as cells having three antennas each, those antennas being directed azimuthally 120° apart.

## Claims

1. A cellular telecommunications network including a plurality of cells (A-G) distributed around a reference cell (C0), at least two cells being assigned as available for frequency-offset duplex communications the same group of RF carrier frequency pairs, characterised in that one of said at least two cells has a different predetermined order of preference for use of said RF carrier frequency pairs than the other or others of said at least two cells so as to reduce interference.

2. A cellular telecommunications network according to claim 1, in which nearest ones of said at least two cells have different predetermined orders of preference for use of said RF carrier frequency pairs.

3. A cellular telecommunications network according to claim 1 or claim 2, in which each of said at least two cells has a different predetermined order to each other of said at least two cells.

4. A cellular telecommunications network according to claim 1 or claim 2, in which where the number of frequency pairs is less than the total of the number of cells next to the reference cell plus the reference cell, those of said at least two cells having the same predetermined order of preference for RF carrier frequency pairs are distributed furthest apart so as to reduce interference.

5. A cellular telecommunications network according to any preceding claim in which neighbouring cells are assigned as available for frequency-offset duplex communications different groups of RF carrier frequency pairs.

6. A cellular telecommunications network according to any preceding claim, in which the RF carrier frequency pairs are for duplex communications within cells between base stations (BTE) and subscriber units (NTE).

7. A cellular telecommunications network according to claim 6, in which subscriber units are at fixed locations.

8. A cellular telecommunications network according to any preceding claim, in which communications are by radio.

9. A cellular telecommunications network according to any preceding claim, in which messages are sent in predetermined time slots within fixed length time frames.

10. A method of selecting for use RF carrier radio frequency pairs in a cellular telecommunications network including a plurality of cells (A-G) distributed around a reference cell (C0) and assigned as available for frequency-offset duplex communications the same group of RF carrier frequency pairs characterised in that each of said at least two cells around the reference cell have different predetermined orders of preference for use of the RF carrier frequency pairs in the group.

11. A method of selecting for use RF carrier radio frequency pairs according to claim 10, in which nearest ones of said at least two cells have different predetermined orders of preference for use of said RF carrier frequency pairs.

12. A method of selecting for use RF carrier radio frequency pairs according to claim 10 or claim 11, in which each of said at least two cells has a different predetermined order to each other of said at least two cells.

13. A method of selecting for use RF carrier radio frequency pairs according to claim 11 or claim 12, in which where the number of frequency pairs is less than the total of the number of cells next to the reference cell plus the reference cell, those of the at least two cells having the same predetermined order of preference for RF carrier frequency pairs are furthest apart so as to reduce interference.

14. A method of selecting for use RF carrier radio frequency pairs according to any of claims 10 to 13, in which neighbouring cells are assigned as available for frequency-offset duplex communications different groups of RF carrier frequency pairs.

## Patentansprüche

1. Zelluläres Telekommunikationsnetz mit einer Vielzahl von Zellen (A - G), die um eine Bezugszelle (CO) herum angeordnet sind, wobei mindestens zwei Zellen die gleiche Gruppe von HF-Trägerfrequenzpaaren als für den Frequenzoffset-Duplexverkehr verfügbar zugewiesen ist, dadurch gekennzeichnet, dass für die Belegung der HF-Trägerfrequenzpaare eine der mindestens zwei Zellen eine andere vorbestimmte Vorzugs-Reihenfolge aufweist als die andere, um Störungen zu vermindern.

2. Zelluläres Telekommunikationsnetz nach Anspruch 1, bei dem nächstliegend der mindestens zwei Zellen für die Belegung der HF-Trägerfrequenzpaare unterschiedliche vorbestimmte Vorzugs-Reihenfolgen haben.

3. Zelluläres Telekommunikationsnetz nach Anspruch 1 oder 2, bei dem die mindestens zwei Zellen für die Belegung der HF-Trägerfrequenzpaare jeweils unterschiedliche vorbestimmte Vorzugs-Reihenfolgen haben.

4. Zelluläres Telekommunikationsnetz nach Anspruch 1 oder 2, bei dem die Anzahl der Frequenzpaare kleiner ist als die Gesamtanzahl der der Bezugs zelle am nächsten liegenden Zellen zuzüglich die Bezugszelle selbst, wobei die von mindestens zwei Zellen mit der gleichen vorbestimmten Vorzugs-Reihenfolge für HF-Trägerfrequenzpaare am weitesten voneinander entfernt sind, um Störungen zu vermindern.

5. Zelluläres Telekommunikationsnetz nach einem der vorgehenden Ansprüche, bei dem benachbarten Zellen verschiedene Gruppen von HF-Trägferfrequenzpaaren als für den Frequenzoffset-Duplexverkehr verfügbar zugewiesen sind.

6. Zelluläres Telekommunikationsnetz nach einem der vorgehenden Ansprüche, bei dem die HF-Trägerfrequenzpaare für den Duplexverkehr innerhalb von Zellen zwischen Basisstationen (BTE) und Teilnehmergeräten (NTE) dienen.

7. Zelluläres Telekommunikationsnetz nach Anspruch 6, bei dem die Teilnehmergeräte sich an festen Standorten befinden.

8. Zelluläres Telekommunikationsnetz nach einem der vorgehenden Ansprüche, bei dem der Verkehr per Funk erfolgt.

9. Zelluläres Telekommunikationsnetz nach einem der vorgehenden Ansprüche, bei dem Nachrichten in vorbestimmten Zeitschlitzen innerhalb von Zeitrahmen fester Länge gesendet werden.

10. Verfahren zur Auswahl von HF-Trägerfrequenzpaaren zur Belegung in einem zellulären Telekommunikationsnetz mit einer Vielzahl von Zellen (A - G), die um eine Bezugszelle (CO) herum angeordnet sind und denen die gleiche Gruppe von HF-Trägerfrequenzpaaren als für den Frequenzoffset-Duplexverkehr verfügbar zugewiesen ist, dadurch gekennzeichnet, dass die mindestens zwei Zellen, die die Bezugszelle umgeben, für die Belegung der HF-Trägerfrequenzpaare in der Gruppe unterschiedliche vorbestimmte Vorzugs-Reihenfolgen haben.

11. Verfahren zur Auswahl von HF-Trägerfrequenzpaaren zur Belegung nach Anspruch 10, bei dem nächstliegende der mindestens zwei Zellen für die Belegung der HF-Trägerfrequenzpaare unterschiedliche Vorzugs-Reihenfolgen haben.

12. Verfahren zur Auswahl von HF-Trägerfrequenzpaaren zur Belegung nach Anspruch 10 oder 11, bei dem die mindestens zwei Zellen jeweils unterschiedliche vorbestimmten Vorzugs-Reihenfolgen haben.

13. Verfahren zur Auswahl von HF-Trägerfrequenzpaaren zur Belegung nach Anspruch 11 oder 12, bei dem die Anzahl der Frequenzpaare niedriger ist als die Gesamtanzahl der an die Bezugszelle angrenzenden Zellen zuzüglich die Bezugszelle, wobei diejenigen der mindestens zwei Zellen mit der gleichen vorbestimmten Vorzugs-Reihenfolge für HF-Trägerfrequenzpaare am weitesten voneinander entfernt sind, um Störungen zu vermindern.

14. Verfahren zur Auswahl von HF-Trägerfrequenzpaaren zur Belegung nach einem der Ansprüche 10 bis 13, bei dem benachbarten Zellen unterschiedliche Gruppen von HF-Trägerfrequenzpaaren als für den Frequenzoffset-Duplexverkehr verfügbar zugewiesen werden.

## Revendications

1. Réseau de télécommunications cellulaire comprenant plusieurs cellules (A-G) distribuées autour d'une cellule de référence (CO), deux cellules au-moins étant attribuées comme étant disponibles pour des communications duplex ä fréquence décalée avec le même groupe de paires de fréquences porteuses HF, caractérisé en ce que l'une des deux cellules au-moins a un ordre de préférence prédéterminé différent pour l'utilisation des dites paires de fréquences porteuses HF que l'autre ou les autres des dites au-moins deux cellules de façon ä réduire l'interférence.

2. Réseau de télécommunications cellulaire selon la revendication 1, dans lequel les plus proches des dites au-moins deux cellules ont des ordres de préférence prédéterminés différents pour l'utilisation des dites paires de fréquences porteuses HF.

3. Réseau de télécommunications cellulaire selon la revendication 1 ou la revendication 2, dans lequel chacune des dites au-moins deux cellules a un ordre prédéterminé par rapport ä chaque autre des dites au-moins deux cellules.

4. Réseau de télécommunications cellulaire selon la revendication 1 ou la revendication 2 dans lequel, lorsque le nombre de paires de fréquences est moindre que le total du nombre de cellules proches de la cellule de fréquence plus la cellule de fréquence, celles des dites au-moins deux cellules qui ont le même ordre de préférence prédéterminé pour des paires de fréquences porteuses HF étant placées le plus loin possible de façon à réduire l'interférence.

5. Réseau de télécommunications cellulaire selon l'une quelconque des revendications précédentes, dans lequel des cellules proches sont assignées comme étant disponibles pour des communications duplex à fréquence décalée avec différents groupes de paires de fréquences porteuses HF.

6. Réseau de télécommunications cellulaire selon l'une quelconque des revendications précédentes, dans lequel les paires de fréquences porteuses HF sont destinées à des communications duplex à l'intérieur de cellules entre des stations de base (BTE) et des unités de souscription (NTE).

7. Réseau de télécommunications cellulaire selon la revendication 6, dans lequel les unités de souscription sont en des endroits fixes.

8. Réseau de télécommunications cellulaire selon l'une quelconque des revendications précédentes, dans lequel les communications s'effectuent par radio.

9. Réseau de télécommunications cellulaire selon l'une quelconque des revendications précédentes, dans lequel des messages sont envoyés dans des tranches de temps prédéterminées à l'intérieur de cadres de temps de longueur fixe.

10. Procédé de sélection pour l'utilisation de paires de fréquences radio porteuses HF dans un réseau de télécommunications cellulaire comprenant plusieurs cellules (A-G) distribuées autour d'une cellule de fréquence (CO) et attribuées comme étant disponibles pour des communications duplex à fréquence décalée avec le même groupe de paires de fréquences porteuses HF, caractérisé en ce que chacune des dites au-moins deux cellules autour de la cellule de référence a des ordres de préférence différents pour l'utilisation des paires de fréquences porteuses HF dans le groupe.

11. Procédé de sélection pour l'utilisation de paires de fréquences radio porteuses selon la revendication 10, selon lequel les plus proches des dites au-moins deux cellules ont des ordres de préférence prédéterminés différents pour l'utilisation des dites paires de fréquences porteuses HF.

12. Procédé de sélection pour l'utilisation de paires de fréquences radio porteuses selon la revendication 10 ou la revendication 11, selon lequel chacune des dites au-moins deux cellules a un ordre prédéterminé différent par rapport à chaque autre cellule des dites au-moins deux cellules.

13. Procédé de sélection pour l'utilisation de paires de fréquences radio porteuses selon la revendication 11 ou 12 selon lequel, lorsque le nombre de paires de fréquences est moindre que le total du nombre de cellules proches de la cellule de référence, celles des au-moins deux cellules ayant le même ordre de préférence prédéterminé pour les paires de fréquences porteuses HF sont écartées le plus possible pour réduire l'interférence.

14. Procédé de sélection pour l'utilisation de paires de fréquences radio porteuses HF selon l'une quelconque des revendications 10 à 13, selon lequel des cellules voisines sont attribuées comme étant disponibles pour des communications duplex à fréquence décalée avec différents groupes de paires de fréquences porteuses HF.
